# EUROPÄISCHE PATENTANMELDUNG

(11) **EP 3 061 553 A1**
(43) Veröffentlichungstag der Anmeldung: **31.08.2016**
(21) Anmeldenummer: 16000282.0
(22) Anmeldetag: 04.02.2016
(51) Int. Cl.: B23D 63/00, B23D 63/12, B25B 11/00

(54) **VORRICHTUNG ZUM BEARBEITEN VON MIT SCHNEIDEN BESETZTEN WERKSTÜCKEN UMFASSEND EINE KLEMMVORRICHTUNG**

(30) Priorität: 24.02.2015 DE 102015002332
(71) Anmelder: VOLLMER WERKE Maschinenfabrik GmbH, 88400 Biberach/Riss (DE)
(72) Erfinder: Gerst, Manuel, 88400 Biberach (DE); Hartmann, Bernd, 51377 Leverkusen (DE); Schanz, Gerhard, 88447 Warthausen (DE); Ehinger, Karl, 88400 Biberach (DE)
(74) Vertreter: Thum, Bernhard

(57) **Zusammenfassung**

Die Erfindung betrifft eine Vorrichtung (10) zum Bearbeiten von mit Schneiden besetzten Werkstücken (16), insbesondere zum Schleif- oder Schärfbearbeiten langgestreckter Sägeblätter (16), umfassend: eine Bearbeitungseinheit (12), die dazu ausgebildet ist, ein Werkzeug (20) zum Bearbeiten des Werkstücks (16) aufzunehmen, eine Werkstückaufnahmeeinrichtung (14), die dazu ausgebildet ist, das Werkstück (16) in einem Aufnahmebereich (18) aufzunehmen, und eine Maschinenkinematik, die dazu ausgebildet ist, eine vorbestimmte Relativbewegung zwischen dem Werkzeug (20) der Bearbeitungseinheit (12) und dem Werkstück (16) der Werkstückaufnahmeeinrichtung (14) zu erzeugen, wobei die Werkstückaufnahmeeinrichtung (14) eine Klemmvorrichtung (22) umfasst, die dazu ausgebildet ist, das Werkstück (20) innerhalb der Werkstückaufnahmeeinrichtung (14) zu fixieren. Dabei ist erfindungsgemäß vorgesehen, dass die Klemmvorrichtung (22) wenigstens einen langgestreckten Expansionskörper (44, 46) umfasst, der sich zumindest abschnittsweise entlang einer Längsachse (L₁) des Aufnahmebereichs (18) erstreckt, und der dazu ausgebildet ist, sich bei einer Expansion zum Aufbringen einer Klemmkraft (K) an dem Werkstück (16) abzustützen.

## Beschreibung

Die Erfindung betrifft eine Vorrichtung zum Bearbeiten von mit Schneiden besetzten Werkstücken, insbesondere zum Schleif- oder Schärfbearbeiten langgestreckter Sägeblätter, umfassend: eine Bearbeitungseinheit, die dazu ausgebildet ist, ein Werkzeug zum Bearbeiten des Werkstücks aufzunehmen, eine Werkstückaufnahmeeinrichtung, die dazu ausgebildet ist, das Werkstück in einem Aufnahmebereich aufzunehmen, und eine Maschinenkinematik, die dazu ausgebildet ist, eine vorbestimmte Relativbewegung zwischen dem Werkzeug der Bearbeitungseinheit und dem Werkstück der Werkstückaufnahmeeinrichtung zu erzeugen, wobei die Werkstückaufnahmeeinrichtung eine Klemmvorrichtung umfasst, die dazu ausgebildet ist, das Werkstück innerhalb der Werkstückaufnahmeeinrichtung zu fixieren.

Derartige Vorrichtungen sind aus dem Stand der Technik bekannt, beispielsweise aus dem Maschinensortiment der Anmelderin sowie dem Dokument DE 69 609 611 T2 oder dem Dokument DE 195 18 710 C1. Die Werkzeuge können dabei insbesondere als Schleif- oder Erodierscheiben ausgebildet sein und zumindest abschnittsweise entlang des Schneidenprofils der Werkstücke geführt werden, bspw. um die Frei- oder Spanflächen der Schneiden zu bearbeiten. Die Werkstücke können insbesondere als langgestreckte Sägeblätter ausgebildet sein, wie beispielsweise Band- oder Gattersägeblätter. Diese werden in einem typischerweise spaltförmigen Aufnahmebereich einer Werkstückaufnahmeeinrichtung aufgenommen und dort fixiert. Der Aufnahmebereich ist dabei im Allgemeinen langgestreckt entlang einer Längsachse ausgebildet. Zum Erzeugen der gewünschten Relativbewegung zwischen Werkzeug und Werkstück kann die Maschinenkinematik in bekannter Weise verschiedene angetriebene Achsen umfassen, die beispielsweise innerhalb der Bearbeitungseinheit angeordnet sein können. Ebenso kann die Bearbeitungseinheit als solche relativ zu der Werkstückaufnahmeeinrichtung verlagert werden.

Zum Ausführen einer Bearbeitung wird das Werkstück in dem Aufnahmebereich aufgenommen, so dass es sich typischerweise ebenfalls längs der Längsachse des Aufnahmebereichs erstreckt. Zum Sichern in dieser Position wird das Werkstück mit der Klemmvorrichtung der Werkstückaufnahmeeinrichtung fixiert. Anschließend kann die Bearbeitung allgemein derart erfolgen, dass das Werkstück in einem zusammenhängenden Bearbeitungsgang entlang einer Bearbeitungslänge bearbeitet wird, die einen einzelnen oder mehrere Schneidenkörper umfasst. Bei einem langgestreckten Sägewerkzeug kann die Bearbeitungslänge beispielsweise einen einzelnen Sägezahn oder Sägezahnbereich einschließen oder eine entsprechende Mehrzahl davon. Die Bearbeitungslänge erstreckt sich dabei typischerweise entlang der Werkstücklängsachse, die, wie vorstehend erläutert, parallel zur Längsachse des Aufnahmebereichs verlaufen oder mit dieser zusammenfallen kann.

Im Rahmen eines Bearbeitungsganges wird das Werkzeug mittels der Maschinenkinematik über die entsprechende Bearbeitungslänge relativ zu dem Werkstück bewegt. Die mittels der Vorrichtung bearbeitbare maximale Bearbeitungslänge wird demnach insbesondere durch die maximalen Strecke definiert, um die die Maschinenkinematik das Werkzeug und das Werkstück entlang der Längsachse des Werkstücks bzw. des Aufnahmebereichs betrachtet relativ zueinander bewegen kann.

In bekannter Weise kann so das Werkstück in einem Bearbeitungsgang vollständig bearbeitet werden, oder, falls die zu bearbeitende Länge des Werkstückes die maximale Bearbeitungslänge der Vorrichtung überschreitet, segmentweise in mehreren Bearbeitungsgängen. In letzterem Fall wird das Werkstück zwischen den einzelnen Bearbeitungsgängen jeweils innerhalb des Aufnahmebereichs verlagert, beispielweise in Längsachsenrichtung des Aufnahmebereichs verschoben.

Es versteht sich, dass auch die erfindungsgemäße Vorrichtung entsprechende Merkmale und Ausgestaltungen der vorstehend beschriebenen Art aufweisen kann.

Für derartige Vorrichtungen sind aus dem Stand der Technik ferner Klemmvorrichtungen zum Fixieren des Werkstückes innerhalb der Werkstückaufnahmeeinrichtung bekannt, bei denen das Werkstück zwischen gegenüberliegenden Klemmbacken geklemmt bzw. eingespannt wird. Die Klemmbacken werden dabei typischerweise mittels hydraulischer oder pneumatischer Zylindereinheiten mit einer Klemmkraft beaufschlagt. Alternativ sind auch mechanische Hebelanordnungen bekannt, die eine Vielzahl von Komponenten umfassen und manuell betätigbar sind. Ein entsprechendes Beispiel ist in der DE 37 13 407 A1 gezeigt.

Die bekannten Klemmvorrichtungen sind jedoch vergleichsweise kompliziert aufgebaut. Dies erhöht die Kosten und mindert die Zuverlässigkeit, wodurch auch die Bearbeitungspräzision beeinträchtigt werden kann.

Es ist deshalb Aufgabe der vorliegenden Erfindung, eine zuverlässige und kostengünstige Möglichkeit zum Erzielen einer Klemmung des Werkstücks innerhalb einer entsprechenden Vorrichtung bereitzustellen.

Diese Aufgabe wird durch eine Vorrichtung der eingangs bezeichneten Art gelöst, bei der die Klemmvorrichtung wenigstens einen langgestreckten Expansionskörper umfasst, der sich zumindest abschnittsweise entlang einer Längsachse des Aufnahmebereichs erstreckt und der dazu ausgebildet ist, sich bei einer Expansion zum Aufbringen einer Klemmkraft an dem Werkstück abzustützen.

Erfindungsgemäß kann demnach vorgesehen sein, dass der Aufnahmebereich mit einer ausgeprägten Längsachse ausgebildet ist, wobei der Aufnahmebereich insbesondere als langgestreckter rechteck- bzw. spaltförmiger Bereich ausgebildet sein kann. Insbesondere kann der Aufnahmebereich dazu ausgebildet sein, ein langgestrecktes Sägeblatt aufzunehmen, und zwar derart, dass die Längsachsen von Aufnahmebereich und Sägeblatt parallel zueinander verlaufen oder zusammenfallen. Erfindungsgemäß kann ferner vorgesehen sein, dass auch der Expansionskörper mit einer ausgeprägten Längsachse ausgebildet ist, wobei sich die Expansionskörperlängsachse vorzugsweise ebenfalls parallel zu der Längsachse des Aufnahmebereiches oder eines darin aufgenommenen Werkstücks erstreckt.

Wie nachfolgend noch ausführlicher erläutert, ermöglicht der Expansionskörper einen weniger komplexen und kostengünstigen Aufbau der erfindungsgemäßen Klemmvorrichtung. Beispielsweise kann dadurch die Anzahl der zusammenwirkenden Komponenten der Klemmvorrichtung gegenüber den bekannten Lösungen aus dem Stand der Technik reduziert werden.

Ebenso haben die Erfinder erkannt, dass der Expansionskörper ein vorteilhaftes Einleiten von Klemmkräften ermöglicht. Bei den bekannten Lösungen werden die Klemmkräfte im Wesentlichen punktuell quer zu der Längsachse des Aufnahmebereichs bzw. eines darin zu fixierenden Werkstückes eingeleitet, bspw. mittels eine quer zu dieser Längsachse auslenkbaren Pneumatikzylinders. Selbst wenn die erzeugten Klemmkräfte zum Beispiel auf eine flächige, in Anlage mit dem Werkstück bringbare Klemmbacke übertragen werden, kann sich entlang der Längsachsen von Aufnahmebereich bzw. Werkstück aufgrund der punktuellen Einleitung in der Folge ein ungleichmäßiger Klemmkraftverlauf einstellen. Dies kann sich nachteilig auf die erreichbare Bearbeitungspräzision auswirken.

Hingegen kann die erfindungsgemäße Lösung vorsehen, dass die Klemmkrafterzeugung bzw. -einleitung im Wesentlichen gleichmäßig und über eine gewisse Länge des Aufnahmebereichs erfolgt und somit nicht lediglich punktuell. Dies wird durch die Längserstreckung des Expansionskörpers entlang der Aufnahmebereichslängsachse erreicht.

Es versteht sich, dass erfindungsgemäß allgemein vorgesehen sein kann, dass der Expansionskörper zum Abbauen der Klemmkraft entsprechend komprimierbar ausgebildet ist. Insbesondere kann der Expansionskörper zum wahlweisen Bereitstellen eines Klemmzustandes und eines klemmkraftfreien Ausgangszustandes der Klemmvorrichtung wahlweise und/oder reversibel bzw. elastisch expandierbar und komprimierbar ausgebildet sein.

Eine Weiterbildung der Erfindung sieht vor, dass die Vorrichtung dazu ausgebildet ist, das Werkstück entlang einer maximalen Bearbeitungslänge zu bearbeiten, wobei sich Expansionskörper zumindest mit einer Länge entlang der Längsachse des Aufnahmebereichs erstreckt. Diese Länge kann mehr als ein Viertel der maximalen Bearbeitungslänge und vorzugsweise mehr als die Hälfte oder mehr als drei Viertel der maximalen Bearbeitungslänge betragen.

Wie einleitend erläutert, betrifft die maximale Bearbeitungslänge insbesondere diejenige Strecke, um die die Maschinenkinematik das Werkzeug und Werkstück entlang der Längsachse des Aufnahmebereichs relativ zueinander bewegen kann. Durch das erfindungsgemäße Bereitstellen einer Erstreckung des Expansionskörpers längs des Aufnahmebereichs mit einer entsprechenden Länge kann gewährleistet werden, dass das Werkstück über entsprechend große Teilbereiche der Bearbeitungslänge zuverlässig geklemmt ist. Dabei kann erfindungsgemäß ebenso vorgesehen sein, dass sich der Expansionskörper über die gesamte maximale Bearbeitungslänge oder sogar darüber hinaus erstreckt, um eine vollständige Klemmung des Werkstücks bereitzustellen. Die vorstehend diskutierten Längen des Expansionskörpers können sich insbesondere auf diejenigen Abschnitte des Expansionskörpers beschränken, die effektiv zu einer Klemmkrafterzeugung oder auch zu einer Rückstellkrafterzeugung gemäß den nachstehenden Varianten beitragen, beispielsweise da sie sich bei einer Expansion unter Erzeugen einer entsprechenden Klemmkraft zumindest mittelbar an dem Werkstück abstützen. Von einer solchen effektiven Länge können insbesondere derartige Abschnitte des Expansionskörpers ausgenommen sein, die lediglich Verbindungsabschnitte bzw. -leitungen von und zu einer Expansionsmittelquellen bilden, wie beispielsweise einem Druckluftanschluss.

Eine Weiterbildung der Erfindung sieht vor, dass der Expansionskörper mit variablen Querschnittsabmessungen ausgebildet ist, wobei der Expansionskörper insbesondere dazu ausgebildet sein kann, sich quer zu der Längsachse des Aufnahmebereichs zu expandieren. Die Querschnittabmessungen können sich dabei insbesondere auf die Abmessungen in einer orthogonal zu der Längsachse des Aufnahmebereichs betrachteten Schnittebene beziehen. Vorzugsweise kann der Querschnitt des Expansionskörpers dabei oval oder kreisförmig ausgebildet sein. Ein Expandieren des Expansionskörpers quer zu der Längsachse des Aufnahmebereichs kann somit insbesondere unter Vergrößern eines Durchmessers des Querschnitts oder einem Verlängern von entsprechenden Querachsen des Querschnitts erfolgen.

Erfindungsgemäß kann ferner vorgesehen sein, dass der Expansionskörper dazu ausgebildet ist, durch Beaufschlagen mit einem Druckmedium zu expandieren. Als geeignete Druckmedien kommen dabei insbesondere Druckluft oder Hydraulikflüssigkeiten in Frage. Dies ermöglicht eine gute Steuerbarkeit oder sogar Regelbarkeit der sich einstellenden Klemmkraft. Ferner vereinfacht dies den mechanischen Aufbau der Klemmvorrichtung.

Eine Weiterbildung der Erfindung sieht vor, dass der Expansionskörper schlauchförmig ausgebildet ist, wobei der Expansionskörper insbesondere zumindest abschnittsweise ein flexibel deformierbares Material umfassen kann. Der schlauchförmige Expansionskörper kann insbesondere mit einem kreis- oder ovalförmigen Querschnitt ausgebildet sein und sich längs des Aufnahmebereichs erstrecken. Durch Ausbilden mit einem flexibel deformierbaren Material kann dabei eine zuverlässige Expandierbarkeit und auch Komprimierbarkeit des Expansionskörpers gewährleistet werden. Diese Weiterbildung ermöglicht insgesamt einen einfachen und kostengünstigen Aufbau der Klemmvorrichtung bei gleichzeitigem Erzielen einer hohen Zuverlässigkeit.

Erfindungsgemäß kann ferner vorgesehen sein, dass der Expansionskörper dazu ausgebildet ist, das Werkstück gegen einen Klemmanschlag zu klemmen, wobei der Klemmanschlag insbesondere auf einer dem Expansionskörper gegenüberliegende Seite der Längsachse des Aufnahmebereichs angeordnet sein kann. Der Klemmanschlag kann in Form einer ebenen Anschlagfläche ausgebildet sein, gegen die das Werkstück gedrückt bzw. geklemmt werden kann. Durch gegenüberliegendes Anordnen von Klemmanschlag und Expansionskörper beidseitig der Längsachse des Aufnahmebereichs kann ein besonders einfacher und kompakter Aufbau der Klemmvorrichtung bereitgestellt werden. Beispielsweise ermöglicht dies das Anordnen sämtlicher klemmkrafterzeugender Komponenten, wie beispielsweise der Expansionskörper, auf einer gemeinsamen Seite der Längsachse des Aufnahmebereichs.

Alternativ zum Vorsehen eines festen Klemmanschlags kann erfindungsgemäß ein nachgiebiges Anschlagelement oder aber eine klemmkrafterzeugenden Komponente vorgesehen sein, die eine der vom Expansionskörper erzeugten Klemmkraft entgegenwirkende Klemmkraft aufbringt. Beispielsweise kann erfindungsgemäß vorgesehen sein, dass beidseitig der Längsachse des Aufnahmebereichs Expansionskörper der vorstehend beschriebenen Art vorgesehen sind, zwischen denen das Werkstück geklemmt werden kann.

Bei einer Weiterbildung der Erfindung ist vorgesehen, dass der Expansionskörper dazu ausgebildet ist, eine Expansionskraft zumindest teilweise auf ein Klemmelement zu übertragen, das zum Erzielen einer Klemmkraft in Anlage mit dem Werkstück bringbar ist. In diesem Zusammenhang kann erfindungsgemäß ferner vorgesehen sein, dass der Expansionskörper dazu ausgebildet ist, das Klemmelement bei einer Expansion in Richtung des Werkstücks zu verlagern.

Das Klemmelement kann erfindungsgemäß insbesondere als sich längs des Expansionskörpers erstreckendes Element ausgebildet sein, beispielsweise als leisten- oder schienenförmiges Bauteil, und vorzugsweise eine metallische Profilleiste umfassen.

Ferner kann das Klemmelement eine dem Aufnahmebereich zugewandte ebene Anschlagfläche umfassen. Erfindungsgemäß kann der Expansionskörper sich dabei insbesondere an einem von der Anschlagfläche abgewandten Bereich des Klemmelements bzw. an einer der Anschlagfläche gegenüberliegenden Seite des Klemmelements abstützen. Entsprechend kann erfindungsgemäß vorgesehen sein, dass das Klemmelement mit einer die Anlagefläche umfassenden Außenseite in Anlage mit einem einzuspannenden Werkstück bringbar ist, wobei der Expansionskörper an einer der Anlagefläche gegenüberliegenden Innenseite des Klemmelements angreift.

Zum Bereitstellen einer zuverlässigen Funktionsweise kann das Klemmelement erfindungsgemäß auch verlagerbar ausgebildet sein. Somit kann vor einem Bearbeiten ein Werkstück zunächst unter einem ausreichenden Spiel in dem Aufnahmebereich angeordnet werden, wenn der Expansionskörpers einen komprimierten Ausgangszustand einnimmt und das Klemmelement sich in einer Ausgangsstellung befindet. Bei einer anschließenden Expansion des Expansionskörpers zum Erzeugen einer Klemmkraft kann das Klemmelement gemeinsam mit den expandierenden Abmessungen des Expansionskörpers in Richtung des Aufnahmebereichs bzw. des Werkstücks verlagert werden und mit Letzterem in Anlage gebracht werden. Zum Sicherstellen einer ausreichend geführten Verlagerungsbewegung kann das Klemmelement dabei in Anlage mit weiteren Komponenten der Klemmvorrichtung stehen und/oder sich an diesen abstützen bzw. daran abgleiten.

In diesem Zusammenhang kann erfindungsgemäß ferner vorgesehen sein, dass das Klemmelement entlang einer Expansionskörperlängsachse betrachtet segmentartig ausgebildet ist, wobei die Segmente insbesondere jeweils um unterschiedliche Maße in Richtung des Werkstücks verlagerbar sein können. Zusätzlich oder alternativ kann vorgesehen sein, dass einzelne Segmente völlig entfernbar sind. Demnach kann das Klemmelement erfindungsgemäß aus einzelnen, separat voneinander ausgebildeten Bauteilen zusammengesetzt sein, die jeweils ein individuell verlagerbares oder völlig entfernbares Segment bilden. Alternativ können die Segmente auch miteinander verbunden sein, jedoch um unterschiedliche Maße relativ zueinander verlagerbar sein. Dies ermöglicht es, dass Dickenunterschiede des Werkstückes oder andere in Querrichtung des Aufnahmebereichs wirkende Toleranzen mittels des Klemmelements zumindest teilweise kompensiert werden können. Insbesondere den regelmäßig mit deutlich größerer Materialstärke ausgebildeten Enden eines Gattersägeblattes kann somit Rechnung getragen werden, indem die Segmente in diesen Bereichen verlagert oder gänzlich entfernt werden. Die übrigen Bereiche des Gattersägeblattes lassen sich mit den verbleibenden Segmenten zuverlässig einspannen.

Erfindungsgemäß kann ferner vorgesehen sein, dass der Expansionskörper dazu ausgebildet ist, sich während einer Expansion an einem Expansionsanschlag abzustützen, wobei der Expansionskörper zwischen dem Expansionsanschlag und dem Werkstück angeordnet ist. Der Expansionsanschlag kann insbesondere als ein feststehendes stufen-, leisten- oder schienenförmiges Element ausgebildet sein und sich parallel zum Expansionskörper erstrecken. Durch Anordnen des Expansionskörpers zwischen dem vorzugsweise feststehenden Expansionsanschlag und dem Aufnahmebereich bzw. einem darin einspannbaren Werkstück kann in zuverlässiger Weise ein geschlossener Kraftfluss zum Verklemmen des Werkstückes innerhalb der Klemmvorrichtung bereitgestellt werden.

Bei einer Weiterbildung der Erfindung ist vorgesehen, dass die Klemmvorrichtung ferner eine Rückführvorrichtung umfasst, die dazu ausgebildet ist, zumindest temporär eine Kraft auf das Klemmelement auszuüben, die entgegen der Klemmkraft wirkt, wobei die Rückführvorrichtung insbesondere dazu ausgebildet sein kann, dass Klemmelement in eine entgegengesetzte Richtung zu verlagern, zu der des ersten Expansionskörpers. Die Rückführvorrichtung hat die Aufgabe, die Klemmvorrichtung in einen im Wesentlichen klemmkraftfreien Ausgangszustand zurückzuführen, in dem ein Werkstück dem Aufnahmebereich entnommen oder darin angeordnet werden kann. Hierzu kann der Klemmkraft des ersten Expansionskörpers temporär gezielt entgegengewirkt werden, beispielsweise durch Einleiten einer größeren, der Klemmkraft entgegenwirkenden Rückführkraft, die auf das Klemmelement wirkt. Alternativ oder zusätzlich können dauerhaft krafteinleitende Komponenten vorgesehen sein, deren Rückführkraft die Klemmkraft nach Reduzieren auf ein bestimmtes Niveau überschreitet, sodass sie eine entsprechende rückführende Wirkung auf das Klemmelement ausüben können.

In diesem Zusammenhang kann erfindungsgemäß ferner vorgesehen sein, dass die Rückführvorrichtung ein Federelement umfasst, insbesondere eine Druckfeder. Das Federelement kann insbesondere dauerhaft auf das Klemmelement einwirken und eine der Klemmkraft entgegenwirkenden Kraft einleiten. Wie vorstehend erläutert, kann nach Reduzieren der Klemmkraft auf ein Niveau unterhalb der Federkraft somit eine rückführende Wirkung zum Verlagern des Klemmelements in einen Ausgangszustand erzielt werden.

Alternativ oder zusätzlich kann erfindungsgemäß vorgesehen sein, dass die Rückführvorrichtung einen zweiten Expansionskörper umfasst. Der zweite Expansionskörper kann allgemein analog zu den vorstehend beschriebenen erfindungsgemäßen Varianten des ersten Expansionskörpers ausgebildet sein. Allerdings ist der zweite Expansionskörper erfindungsgemäß derart innerhalb der Klemmvorrichtung angeordnet, dass er eine der Klemmkraft entgegenwirkende Rückführkraft bereitstellen kann, um die Klemmvorrichtung in einen Ausgangszustand zurückzuführen.

Bei dieser Weiterbildung kann die Klemmvorrichtung insbesondere dazu ausgebildet sein, den ersten und zweiten Expansionskörper wahlweise bzw. abwechselnd zum Erzeugen ihrer jeweils bereitstellbaren Kräfte anzusteuern. Mit anderen Worten kann die Vorrichtung dazu ausgebildet sein, durch entsprechendes Ansteuern der Expansionskörper wahlweise den Ausgangs- und den Klemmzustand der Klemmvorrichtung bereitzustellen. In der vorstehend beschriebenen Weise kann das Ansteuern dabei insbesondere ein definiertes Beaufschlagen der Expansionskörper mit Druck beinhalten.

Beispielsweise kann vorgesehen sein, dass der zweite Expansionskörper das Klemmelement zum Bereitstellen des klemmkraftfreien Ausgangszustandes in eine Ausgangsstellung verlagert und dort vorzugsweise unter zumindest teilweisem Aufrechterhalten einer Rückführkraft hält. Alternativ kann die Klemmkraft des zweiten Expansionskörpers auch im Wesentlichen vollständig abgebaut werden, zum Beispiel durch ein vollständiges Komprimieren bzw. Druckabbauen. Sobald ein Klemmzustand erzielt werden soll, wird mittels des ersten Expansionskörpers eine entsprechende Klemmkraft erzeugt, die entgegen der aktuellen Rückführkraft des zweiten Expansionskörpers wirkt und diese überschreitet. Dadurch kann das Klemmelement in Anlage mit einem einzuspannenden Werkstück gebracht werden und dieses in der Werkstückaufnahmeeinrichtung fixieren. Zum Entnehmen oder Verlagern des Werkstücks kann wiederum die Klemmkraft des ersten Expansionskörpers reduziert oder vollständig abgebaut werden. Unter Erzeugen einer entsprechenden Rückführkraft mittels einer Expansion des zweiten Expansionskörpers kann das Klemmelement dann in seine Ausgangsstellung zurückgeführt werden.

In diesem Zusammenhang sieht eine Weiterbildung der Erfindung vor, dass der zweite Expansionskörper dazu ausgebildet ist, eine Expansionskraft in einen Flächenabschnitt des Klemmelements einzuleiten, der einer als Anlagefläche zum Werkstück dienenden Fläche des Klemmelements gegenüberliegt, und insbesondere, dass das Klemmelement den ersten und zweiten Expansionskörper zumindest abschnittsweise überspannt. Bei dieser Weiterbildung kann der mit dem zweiten Expansionskörper wechselwirkende Flächenabschnitt des Klemmelements - beispielsweise in Querrichtung zur Längsachse des Aufnahmebereichs betrachtet - weiter von der Längsachse beabstandet sein, als die Anlagefläche des Klemmelements.

Durch ein erfindungsgemäßes, den ersten und zweiten Expansionskörper überspannendes Ausbilden des Klemmelements kann eine besonders kompakte Klemmvorrichtung bereitgestellt werden. Beispielsweise kann vorgesehen sein, dass das Klemmelement in einem orthogonal zu der Längsachse des Aufnahmebereichs verlaufenden Schnitt betrachtet mit einem geschlossenen Querschnittsprofil oder einem zumindest einseitig offenem, insbesondere einem rechtecks- oder C-förmigen Querschnittsprofil ausgebildet ist. Dabei können der erste und zweite Expansionskörper zumindest teilweise innerhalb des von diesem Querschnittsprofil überspannten Raumes angeordnet sein, beispielsweise zwischen gegenüberliegenden Schenkeln eines C-förmigen Querschnittsprofils.

Erfindungsgemäß kann ferner vorgesehen sein, dass der erste und zweite Expansionskörper beidseitig des Expansionsanschlags angeordnet sind, wobei das Klemmelement insbesondere den ersten und zweiten Expansionskörper und den Expansionsanschlag zumindest abschnittsweise überspannen kann. Auch dies ermöglicht einen einfachen und kompakten Aufbau der Klemmvorrichtung.

Die Erfindung wird im Folgenden beispielhaft anhand der folgenden Figuren erläutert. Es stellen dar:
- Fig. 1: eine perspektivische Ansicht einer Ausführungsform einer erfindungsgemäßen Vorrichtung;
- Fig. 2: eine perspektivische Einzelteildarstellung einer Klemmvorrichtung der Vorrichtung aus Fig. 1;
- Fig. 3: eine Querschnittsansicht der Klemmvorrichtung gemäß Schnittlinie S-S aus Fig. 2, wobei die Schnittebene orthogonal zu der Längsachse eines Aufnahmebereichs der Vorrichtung aus Fig. 1 verläuft, und bei der sich die Klemmvorrichtung in einem klemmkraftfreien Ausgangszustand befindet;
- Fig. 4: eine Darstellung der Klemmvorrichtung analog zu Fig. 3, bei der sich die Klemmvorrichtung in einem Klemmzustand befindet;
- Fig. 5: eine Darstellung einer Klemmvorrichtung gemäß einer weiteren Ausführungsform der Erfindung, wobei die Klemmvorrichtung in einer Querschnittsansicht analog zu den Fign. 3 und 4 gezeigt ist; und
- Fig. 6: eine Darstellung der Klemmvorrichtung gemäß Fig. 5 in einer perspektivischen Einzelteildarstellung analog zu Fig. 2.

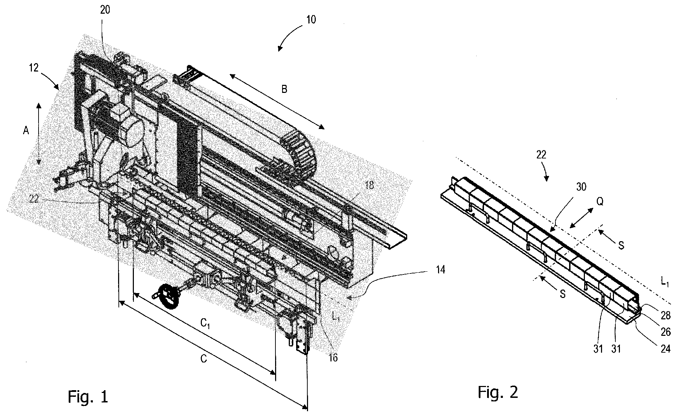

In Fig. 1 ist eine erfindungsgemäße Vorrichtung schematisch dargestellt und allgemein mit 10 bezeichnet. Die Vorrichtung 10 umfasst einen allgemein bekannten Aufbau mit einer Bearbeitungseinheit 12 und einer Werkstückaufnahmeeinrichtung 14, die an einem nicht gesondert bezeichneten Maschinenbett angeordnet sind. Im gezeigten Fall ist die Vorrichtung 10 zum Bearbeiten eines Werkstücks 16 in Form eines langgestreckten Gattersägeblattes ausgebildet. Hierzu ist das Sägeblatt 16 in einem sich entlang einer Längsachse L₁ erstreckenden, spaltförmigen Aufnahmebereich 18 der Werkstückaufnahmeeinrichtung 14 aufgenommen. Dabei fällt die Längsachse L₁ des Aufnahmebereichs 18 mit einer Werkstücklängsachse des Sägeblatts 16 zusammen.

Die Bearbeitungseinheit 12 umfasst in bekannter Weise ein rotatorisch angetriebenes Werkzeug 20 in Form einer Schleifscheibe. Dieses kann mittels einer ebenfalls bekannten Maschinenkinematik relativ zum Sägeblatt 16 bewegt werden und insbesondere entlang der Längsachse L₁ des Aufnahmebereichs 18 verlagert werden. Die Werkstückaufnahmeeinrichtung 14 und das darin aufgenommene Werkstück 16 sind hingegen allgemein feststehend innerhalb der Vorrichtung 10 angeordnet.

Als wesentliche Bestandteile der Maschinenkinematik weist die Bearbeitungseinheit 12 eine vertikale Hubachse A zum Führen des Werkzeugs 20 quer zur Längsachse L₁ des Aufnahmebereichs 18 auf. Ferner ist eine Horizontalachse B vorgesehen, mit der die Bearbeitungseinheit 12 längs der Längsachse L₁ verlagerbar ist. Dabei kann die Bearbeitungseinheit 12 insgesamt um eine Strecke C längs der Längsachse L₁ verlagert werden. Die Strecke C entspricht einer maximalen Bearbeitungslänge entlang derer die Vorrichtung 10 ein in der Werkstückaufnahmeeinrichtung 14 angeordnetes Werkstück 16 in einem Bearbeitungsgang bearbeiten kann.

Die Werkstückaufnahmeeinrichtung 14 weist eine Klemmvorrichtung 22 auf, mit der das Sägeblatt 16 innerhalb der Werkstückaufnahmeeinrichtung 14 fixierbar ist. Man erkennt in Fig. 1, dass die Klemmvorrichtung 22 ebenfalls im Wesentlichen langgestreckt ausgebildet ist und sich entlang der Längsachse L₁ des Aufnahmebereichs 18 erstreckt. Im gezeigten Fall erstreckt sich die Klemmvorrichtung 22 über eine Strecke C₁ entlang der Längsachse L₁, wobei die Strecke C₁ drei Viertel der maximalen Bearbeitungslänge C beträgt.

In Fig. 2 ist die Klemmvorrichtung 22 der Vorrichtung 10 aus Fig. 1 in perspektivischer Einzelteildarstellung dargestellt. Zum besseren Verständnis ist in Fig. 1 wiederum der Verlauf der Längsachse L₁ des Aufnahmebereichs 18 angedeutet. Wie im Folgenden noch näher erläutert, ist die Klemmvorrichtung 22 mit einem ebenen Basisabschnitt 24 ausgebildet, an dem eine sich parallel zum Basisabschnitt 24 erstreckende Basisleiste 26 angeordnet ist. Ferner erkennt man ein sich rechtwinklig zur Basisleiste 26 erstreckendes leistenförmiges Element, welches einen Expansionsanschlag 28 der Klemmvorrichtung 22 bildet. Die Basisleiste 26 und der Expansionsanschlag 28 werden dabei von einem segmentartig ausgebildeten Klemmelement 30 überspannt, wobei innerhalb des Klemmelements 30 und beidseitig des Expansionsanschlags 28 nachfolgend beschriebene Expansionskörper 44, 46 angeordnet sind (in Fig.2 nicht dargestellt).

Die einzelnen Segmente 31 des Klemmelements 30 sind jeweils um ein individuelles Maß entlang einer Querachse Q relativ zu der Längsachse L₁ verlagerbar. Dabei erstreckt sich die Querachse Q allgemein rechtwinklig zu der Längsachse L₁ und zu der vertikalen aufrechten, die Längsachse L₁ enhaltenen Ebene des in Fig. 1 gezeigten Sägeblatts 16.

Im gezeigten Fall ist das Klemmelement 30 bzw. sind dessen Segmente 31 relativ zu den übrigen Komponenten der Klemmvorrichtung 22 verlagerbar ausgebildet, insbesondere relativ zu der allgemein feststehend ausgebildeten Baugruppe von Basisabschnitt 24, Basisleiste 26 und Expansionsanschlag 28. Aus Gründen der Übersichtlichkeit sind nicht sämtliche Segmente 31 in Fig. 2 mit einem entsprechenden Bezugszeichen versehen.

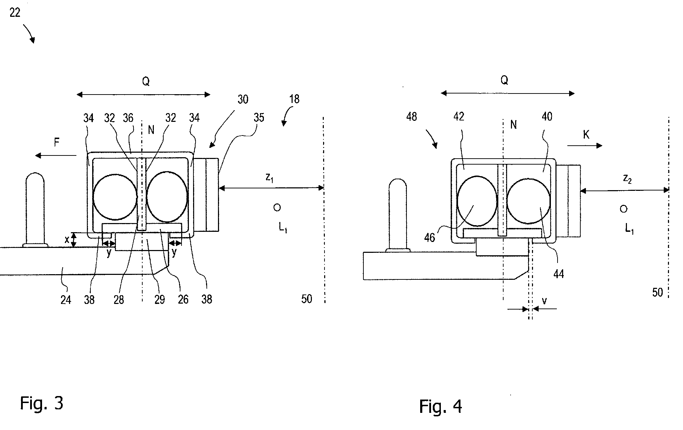

Die Figuren 3 und 4 zeigen jeweils eine Querschnittsansicht der Klemmvorrichtung 22 entlang der Schnittlinie S-S in Fig. 2, die sich parallel zu der Querachse Q erstreckt. Die Schnittebene verläuft somit orthogonal zu der Längsachse L₁ des Aufnahmebereichs 18. Dabei zeigt die Fig. 3 die Klemmvorrichtung 22 in einem klemmkraftfreien Ausgangszustand und die Fig. 4 zeigt die Klemmvorrichtung 22 in einem Klemmzustand. Zur weiteren Erläuterung des Aufbaus der Klemmvorrichtung 22 wird auf beide Figuren 3 und 4 Bezug genommen, wobei aus Gründen der Übersichtlichkeit die relevanten Bezugszeichen teilweise nur in einer der Figuren eingetragen sind.

Zum besseren Verständnis ist in den Figuren 3 und 4 wiederum die Längsachse L₁ des Aufnahmebereichs 18 angedeutet, wobei diese orthogonal zur Blattebene verläuft. Entsprechend ist die Längsachse L₁ in diesen Figuren punkt- bzw. kreisförmig dargestellt. Ebenso ist die Querachse Q angedeutet, entlang derer das Klemmelement 30 verlagerbar ist.

In Fig. 3 erkennt man erneut den ebenen Basisabschnitt 24 der Klemmvorrichtung 22 sowie die daran angeordnete Basisleiste 26. Die Basisleiste 26 ist mit dem Basisabschnitt 24 über ein Verbindungsabschnitt 29 verbunden, sodass die Basisleiste 26 in einer Normalenrichtung des Basisabschnitts 24 betrachtet um eine Strecke x von diesem beabstandet ist. Ferner steht die Basisprofilleiste 26 in Fig. 3 parallel zu der Ebene des Basisabschnitts 24 bzw. in Querachsenrichtung Q beidseitig vom Verbindungsabschnitt 28 um die Strecke y hervor. Die Abstände x, y spannen dabei einen freien Raum für die Verlagerung des Klemmelements 30 auf, wie nachfolgend noch ausführlicher erläutert. Ferner stellen die überstehenden Bereiche der Basisleiste 26 eine Hinterscheidung zum verlagerbaren Führen des Klemmelements 30 bereit.

An der Basisleiste 26 ist ferner der Expansionsanschlag 28 angeordnet, der zwei gegenüberliegende Anschlagflächen 32 aufweist. Der Expansionsanschlag 28 definiert eine im Folgenden als Referenzlage bezeichnete Lage N, welche durch eine strichlinierte Achse dargestellt ist.

In den Figuren 3 und 4 erkennt man ferner, dass der Expansionsanschlag 28 und die Basisprofilleiste 26 von dem Klemmelement 30 überspannt bzw. umgriffen werden. Hierzu ist das Klemmelement 30 mit einem einseitig geöffneten rechtecks- bzw. C-förmigen Querschnittsprofil ausgebildet. Dabei weist die geöffnete Seite des Querschnittsprofils in Richtung des Basisabschnitts 24, also in den Figuren 3 und 4 nach unten.

Das Klemmelement 30 ist entsprechend mit zwei gegenüberliegenden, sich parallel zur Längsachse L₁ erstreckenden Vertikalschenkeln 34 ausgebildet, die rechtwinklig zu der Querachse Q verlaufen. Die Vertikalschenkel 34 sind mittels eines sich in Querachsenrichtung Q erstreckenden Verbindungsschenkels 36 verbunden. Dabei liegt der Verbindungsschenkel 36 an einer von der Basisleiste 26 abgewandten Oberseite des Expansionsanschlages 28 an.

Der nahe der Längsachse L₁ angeordnete Vertikalschenkel 34 des Klemmelements 30 bildet einen Teil des Anlagebereichs des Klemmelements 30 zum Werkstück 16. Hierzu sind an der Außenseite des entsprechenden Vertikalschenkels 34 zusätzlich ebene Anschlagelemente 35 angeordnet, die eine Anschlagfläche bilden, mit der das Klemmelement 30 in Anlage mit einer Außenseite des in Fig. 1 dargestellten Sägeblatts 16 bringbar ist.

Auf einer den Anschlagelementen 35 gegenüberliegenden Seite der Längsachse L₁ ist ein Klemmanschlag 50 strichliniert angedeutet ist. Der Abstand z₁, z₂ zwischen den Anschlagelementen 35 und Klemmanschlag 50 in Querachsenrichtung Q definiert dabei eine Breite des Aufnahmebereichs 18.

Die Vertikalschenkel 34 sind an ihren dem Verbindungsschenkel 36 gegenüberliegenden Enden jeweils mit abgewinkelten Endabschnitten 38 ausgebildet. Die Endabschnitte 38 erstrecken sich jeweils in Querachsenrichtung Q und in Richtung des Expansionsanschlags 28. Ferner reichen die Endabschnitte 38 in den freien Raum unterhalb der Basisleiste 26 hinein und liegen an einer dem Basisabschnitt 24 zugewandten Unterseite der Basisleiste 26 an. Die Endabschnitte 38 umgreifen somit die als Hinterschneidung dienenden überstehenden Bereiche der Basisleiste 26.

Man erkennt ferner, dass eine Erstreckung der Basisprofilleiste 26 in Querachsenrichtung Q geringer ausfällt, als ein entsprechender Abstand zwischen den Vertikalschenkeln 34. Ebenfalls ist der Abstand zwischen den Endabschnitte 38 in die Querachsenrichtung Q größer, als eine entsprechende Breite des dazwischen angeordneten Verbindungsabschnittes 29.

Somit ist das Klemmelement 30 mit einem gewissen Spiel in die Querachsenrichtung Q an der Basisleiste 26 angeordnet und entlang dieser Querachse Q quer zu der Längsachse L₁ verlagerbar. Dabei wird die Verlagerungsbewegung des Klemmelements 30 durch die Anlage an der Oberseite des Expansionsanschlages 28 sowie die Anlage an der Unterseite der Basisleiste 26 geführt.

Das Klemmelement 30 definiert in Zusammenwirkung mit dem Expansionsanschlag 28 und der Basisleiste 26 ferner zwei Expansionskammern 40, 42, die beidseitig des Expansionsanschlages 28 angeordnet sind. In diesen Expansionskammern 40, 42 ist jeweils ein schlauchförmiger Expansionskörper 44, 46 angeordnet.

In der nahe den Anschlagelementen 35 bzw. der Längsachse L₁ angeordneten ersten Expansionskammer 40 befindet sich ein erster Expansionskörper 44, der dazu ausgebildet ist, zum Bereitstellen einer Klemmkraft K zu expandieren. Dadurch wird die Klemmvorrichtung 22 in den in Fig. 4 gezeigten Klemmzustand zu versetzen. In der von der Längsachse L₁ weiter entfernten Expansionskammer 42 ist der zweite Expansionskörper 46 angeordnet, der eine Rückführvorrichtung 48 der Klemmvorrichtung 22 bildet, wie nachfolgend noch genauer erläutert.

Die beiden Expansionskörper 44, 46 erstrecken sich entlang der Längsachse L₁ orthogonal zu der Blattebene und längs des Aufnahmebereichs 18 über die in Fig. 1 mit C₁ bezeichnete Länge der Klemmvorrichtung 22. Ferner sind die Expansionskörper 44, 46 in herkömmlicher Weise mit einem Pneumatiksystem verbunden und können zum Erzielen einer Expansion oder Kompression gezielt mit Druckluft beaufschlagt werden.

In Fig. 3 ist die Klemmvorrichtung 22 in einem klemmkraftfreien Ausgangszustand gezeigt, bei der keine fixierende Klemmkraft K auf ein Werkstück 16 ausgeübt wird. Dabei ist der erste Expansionskörper 44 mit einem geringfügigen Druck beaufschlagt, sodass er eine ovale Querschnittsform annimmt. Hingegen ist der zweite Expansionskörper 46 mit einem erhöhten Druck beaufschlagt und nimmt eine kreisförmige Querschnittsform an. Dabei stützt sich der zweite Expansionskörper 48 an eine Anschlagfläche 32 des feststehenden Expansionsanschlags 28 ab und auch an einer Innenseite des von der Längsachse L₁ weiter entfernten Vertikalschenkels 34 des Klemmelements 30.

In Folge der Expansion des zweiten Expansionskörpers 46 übt dieser eine Rückführkraft R auf das Klemmelement 30 auf. Dadurch wird das Klemmelement 30 gegenüber der Referenzstellung N in Querachsenrichtung Q von der Längsachse L₁ wegbewegt, also in Fig. 3 nach links. Dadurch vergrößert sich der Abstand zwischen den Anschlagelementen 35 und einem gegenüberliegenden Klemmanschlag 50, sodass sich die Breite z₁ des Aufnahmebereichs 18 vergrößert. Somit kann das in Fig. 3 nicht dargestellte Werkstück 16 klemmkraftfrei und unter Spiel in dem Aufnahmebereich 18 aufgenommen werden.

Wie in Fig. 4 gezeigt, wird zum Erzeugen einer Klemmkraft K hingegen der erste Expansionskörper 44 mit einem erhöhten Druck beaufschlagt und der Druck in dem zweiten Expansionskörper 46 wird reduziert. Entsprechend expandiert der erste Expansionskörper 44 zu einer kreisförmige Querschnittsform, während der zweite Expansionskörper 46 zu einer ovalen Querschnittsform komprimiert. Dabei liegt der erste Expansionskörper 44 an einer Innenseite des nahe der Längsachse L₁ angeordneten Vertikalschenkels 34 an und stützt sich an diesem ab. In der Folge wird eine Klemmkraft K auf das Klemmelement 30 übertragen, die in Richtung der Längsachse L₁ wirkt. Dadurch wird das Klemmelement 30 gegenüber seiner Referenzstellung N entlang der Querachse Q in Richtung der Längsachse L₁ verlagert, also in Fig. 4 nach rechts. Dadurch verringert sich die Breite z₂ des Aufnahmebereichs 18. Folglich können die Anschlagelemente 35 mit einer Außenseite des Sägeblatts 16 aus Fig. 1 in Anlage gebracht werden und dieses gegen den Klemmanschlag 50 klemmen.

Bei einer Zusammenschau der Figuren 3 und 4 erkennt man, dass die Expansionskörper 44, 46 bei einem expandieren hin zu einer kreisförmigen Querschnittsform ihre Querschnittsabmessungen insbesondere in Querachsenrichtung Q vergrößern. Ebenso verdeutlicht sich die Verlagerung des Klemmelements 30 relativ zu den übrigen feststehenden Komponenten der Klemmvorrichtung 22. So variiert je nach Verlagerungszustand des Klemmelements 30 der Abstand v der Endabschnitte 38 zu dem Verbindungsabschnitt 29.

Ferner ist allgemein vorgesehen, dass die Verlagerung des Klemmelements 30 zum Erzielen einer Klemmkraft und zum Rückführen in den Ausgangszustands mit einem gleichen Streckenbetrag erfolgt. Dass heißt, es ist allgemein vorgesehen, dass die Breitenänderung des Aufnahmebereichs 18 von z₁ zu z₂ und von z₂ zu z₁ mit einem gleichen Betrag erfolgt. Es versteht sich, dass je nach zu bearbeitendem Werkstück 16 oder zu erzielender Klemmkraft K, die Verlagerungsbeträge der Klemmvorrichtung 30 auch gezielt eingestellt werden können.

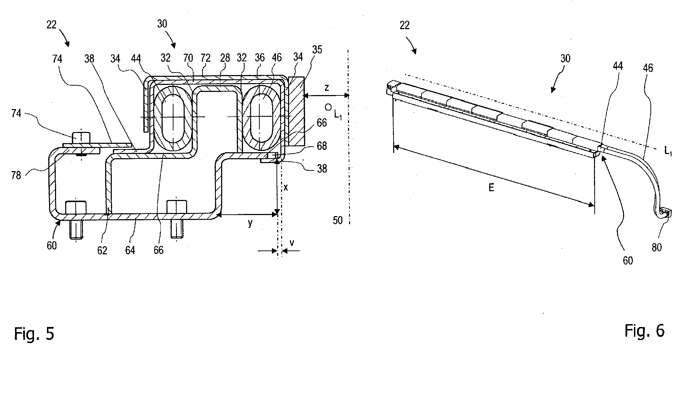

In Fig. 5 ist eine alternative Ausführungsform der Klemmvorrichtung 22 gezeigt. Diese ist in einer analogen Querschnittsansicht zu den Fign. 3 und 4 gezeigt. Im Folgenden werden für gleichartige oder gleichwirkende Komponenten die gleichen Bezugszeichen verwendet, wie für die vorstehend diskutierte Ausführungsform. Die Klemmvorrichtung 22 gemäß Fig. 5 ist hinsichtlich ihrer Funktion im Wesentlichen so wie die vorstehend beschriebene Variante ausgebildet, unterscheidet sich jedoch bezüglich einzelner konstruktiver Details hiervon.

So erkennt man in Fig. 5 wiederum die beiden Expansionskörper 44, 46, die innerhalb eines Raumes angeordnet sind, der von einem Klemmelement 30 sowie einem Basisprofil 60 umschlossen wird. Im Gegensatz zu der Variante gemäß den Fign. 3 und 4 fasst das Basisprofil 60 die wesentlichen konstruktiven Gestaltungsmerkmale der einzelnen Leisten bzw. Profilelemente, wie beispielsweise der Basisleiste 26, dem Basisabschnitt 24, dem Expansionsanschlag 28 und dem Verbindungsabschnitt 29, in einer gemeinsamen Einheit zusammen. Im gezeigten Fall ist das Basisprofil 60 aus zwei gebogenen Profilelementen in Form eines oberen Profilelements 62 und eines unteren Profilelements 64 zusammengesetzt. Alternativ kann das Basisprofil 60 auch einstückig ausgebildet sein oder mehr als zwei Teilelemente 62, 64 umfassen.

Das Basisprofil 60 weist zwei sich in Fig. 5 in Querrichtung Q erstreckende bzw. horizontal verlaufende Basisabschnitte 66 auf. Diese entsprechen hinsichtlich ihrer Funktion jeweils der Basisleiste 26 gemäß der ersten Ausführungsform. Die Basisabschnitte 66 sind mittels eines U-förmigen mittleren Abschnitts verbunden, der zwei vertikale Anschlagflächen 32 bereitstellt und somit einen Expansionsanschlag 28 analog zu der vorstehenden gezeigten Ausführungsform bildet. Man erkennt in Fig. 5 entsprechend, dass sich die Expansionskörper 44, 46 an den vertikalen Schenkeln des Expansionsanschlags 28 abstützen.

Die Anordnung aus Basisabschnitten 66 und Expansionsanschlag 28 wird wiederum durch das Klemmelement 30 überspannt bzw. umgriffen. Hierzu ist am in Fig. 5 rechten Basisabschnitt 66 ein freier Raum gemäß den Abständen x, y definiert, der eine Verlagerung des Klemmelements 30 in die Querrichtung Q relativ zum Basisprofil 60 ermöglicht. Hierzu bildet das freie Ende 68 des in Fig. 5 rechten Basisabschnitts 66 eine Hinterschneidung, die von einem abgewinkelten Endabschnitt 38 des Klemmelements 30 umgriffen wird. Der in Fig. 5 rechte Basisabschnitt 66 bildet ferner denjenigen Bereich der Klemmvorrichtung 22, der nahe zu dem Aufnahmebereich 18 angeordnet ist. Zur Verdeutlichung sind in Fig. 5 wiederum die Lage der Längsachse L₁ angedeutet, sowie der Abstand z zu einem Klemmanschlag 50.

Man erkennt ferner einen Abstand v zwischen dem Klemmelement 30 und dem freien Ende 68 des Basisabschnitts 66, der ein Spiel in Querrichtung Q zwischen den genannten Komponenten bereitstellt.

In der gezeigten Ausführungsform ist das Klemmelement 30 zweiteilig ausgebildet und umfasst einen inneren Führungskörper 70 sowie einen äußeren Klemmkörper 72. Der innere Führungskörper 70 ist als einseitig offenes Rechteckprofil ausgebildet und weist an seinem in Figur 5 rechten Ende den erwähnten abgewinkelten Endbereich 38 auf, der das freie Ende 68 des Basisabschnitts 66 umgreift. An dem in Fig. 5 linken Ende des inneren Führungskörpers 70 ist ebenfalls ein abgewinkelter Endbereich 38 vorgesehen. Dieser weist jedoch nicht wie am rechten Ende nach innen, sondern steht gegenüber der von den übrigen Abschnitten des Führungskörpers 70 aufgespannten Rechteckfläche in die Querrichtung Q nach außen ab. Ferner erkennt man in Fig. 5, dass der rechte abgewinkelte Endbereich 38 an der Oberseite des rechten Basisabschnitts 66 aufliegt. Dadurch wird eine zusätzliche Führung des Klemmelements 30 im Falle einer mittels der Expansionskörper 44, 46 erzeugten Verlagerungsbewegung ermöglicht. Ferner erleichtert diese Gestaltung des Klemmelements 30 die Montage an dem Basisprofil 60, da nach Einhaken des rechten abgewinkelten Endabschnittes 38 an dem freien Ende 68 das Klemmelement 30 mittels einer Kippbewegung sozusagen dem Expansionsanschlag 28 übergestülpt werden kann.

Als eine weitere Komponente weist das Klemmelement 30 den äußeren Klemmkörper 72 auf, der mit Ausnahme der abgewinkelten Endabschnitte 38 korrespondierend zu dem Führungskörper 70 als einseitig offenes Rechteckprofil ausgebildet und auf den Führungskörper 70 aufgesetzt und darauf verschiebbar angebracht ist. Dadurch ist es möglich, ein Gattersägeblatt entlang seiner Länge sicher einzuspannen, obwohl dieses entlang seiner Länge in seiner Materialstärke variieren kann. An den materialstarken dicken Bereichen des Gattersägeblattes, beispielsweise an seinen Endbereichen, kann das Klemmelement segmentweise sogar entfernt werden, wie in Figur 6 gezeigt, um eine hinreichende Klemmung in den übrigen Bereichen des Gattersägeblattes zu erreichen. Das Klemmelement 30 weist wiederum zwei Vertikalschenkel 34 auf, die von einem in Querrichtung Q verlaufenden Verbindungsschenkel 36 verbunden sind. An dem nahe der Längsachse L₁ angeordneten Vertikalschenkel 34 ist ein Anschlagelement 35 vorgesehen, das eine Anschlagfläche zum Klemmen des Werkstücks 16 bereitstellt.

Als weitere Komponente ist an dem Basisprofil 60 eine Sicherungsleiste 74 vorgesehen. Diese überlappt in der Querrichtung Q abschnittsweise mit dem in Fig. 5 linken abgewinkelten Endabschnitt 38 des Klemmelements 30 und ist dabei oberhalb von diesem angeordnet. Die Basisleiste 74 ist durch Befestigungsmittel 76 in Form von Schraubbolzen an einem Befestigungsabschnitt 78 des Basisprofils 60 befestigt. Durch das Überlappen mit dem abgewinkelten Endbereich 38 kann das Klemmelement 30 durch die Sicherungsleiste 74, insbesondere gegen ein Verkippen um seine Längsachse, gesichert werden.

Wie einleitend erwähnt, entspricht die Funktionsweise der Klemmvorrichtung 22 gemäß Fig. 5 derjenigen, wie anhand der Fign. 3 und 4 diskutiert. Durch entsprechendes Expandieren und Komprimieren der Expansionskörper 44, 46 kann das Klemmelement 30 somit unter Vergrößerung und Verkleinerung des Spiels v bzw. des Abstandes z in Querrichtung Q bewegt werden, sodass eine Breite des Aufnahmebereichs 18 variiert und ein darin angeordnetes Werkstück 16 festgeklemmt oder gelöst werden kann.

In Fig. 6 ist ferner eine perspektivische Einzelteildarstellung der Klemmvorrichtung 22 analog zu Fig. 2 gemäß der ersten Ausführungsform gezeigt. Man erkennt darin die längliche Ausbildung der Klemmvorrichtung 22 entlang der Längsachse L₁ sowie die vorstehend diskutierte Anordnung aus Basisprofil 60 und Klemmelement 30. Ferner ist in Fig. 6 gezeigt, dass die Expansionskörper 44, 46 aus dem Klemmelement 30 hervorragen. Dabei erstrecken sie sich zu einem innerhalb der Vorrichtung 10 bereitgestellten Druckmittelanschluss 80 und sind an diesem angeschlossen. Die aus dem Klemmelement 30 hervorstehenden Bereiche der Expansionskörper 44, 46 tragen im gezeigten Ausführungsbeispiel jedoch nicht zu einem Aufbringen einer entsprechenden Klemm- bzw. Rückstellkraft bei, da sich deren Expansion und Kompression nicht im Sinne einer Verlagerungsbewegung auf das Klemmelement 30 übertragen lässt. Sie bilden somit keinen Teil einer für die Klemm- bzw. Rückstellkrafterzeugung effektiven Länge E der Expansionskörper 44, 46. Vielmehr entspricht diese effektive Länge E bei der Variante gemäß Fig. 6 der Länge der Klemmvorrichtung 22 entlang der Längsachse L₁, also insbesondere der axialen Länge des Klemmelements 30, durch das sich die Expansionskörper 44, 46 vollständig axial erstrecken.

Wie vorstehend bereits erläutert, zeigt Figur 6 auch, dass einzelne Segmente des Klemmelements 30 entfernt wurden.

## Patentansprüche

1. Vorrichtung (10) zum Bearbeiten von mit Schneiden besetzten Werkstücken (16),
insbesondere zum Schleif- oder Schärfbearbeiten langgestreckter Sägeblätter (16), umfassend:
- eine Bearbeitungseinheit (12), die dazu ausgebildet ist, ein Werkzeug (20) zum Bearbeiten des Werkstücks (16) aufzunehmen,
- eine Werstückaufnahmeeinrichtung (14), die dazu ausgebildet ist, das Werkstück (16) in einem Aufnahmebereich (18) aufzunehmen, und
- eine Maschninenkinematik, die dazu ausgebildet ist, eine vorbestimmte Relativbewegung zwischen dem Werkzeug (20) der Bearbeitungseinheit (12) und dem Werkstück (16) der Werstückaufnahmeeinrichtung (14) zu erzeugen,
wobei die Werstückaufnahmeeinrichtung (14) eine Klemmvorrichtung (22) umfasst, die dazu ausgebildet ist, das Werkstück (20) innerhalb der Werstückaufnahmeeinrichtung (14) zu fixieren,
**dadurch gekennzeichnet, dass** die Klemmvorrichtung (22) wenigstens einen langgestreckten Expansionskörper (44, 46) umfasst, der sich zumindest abschnittsweise entlang einer Längsachse (L₁) des Aufnahmebereichs (18) erstreckt, und der dazu ausgebildet ist, sich bei einer Expansion zum Aufbringen einer Klemmkraft (K) an dem Werkstück (16) abzustützen.

2. Vorrichtung (10) nach Anspruch 1,
**dadurch gekennzeichnet, dass** die Vorrichtung (10) dazu ausgebildet ist, das Werkstück (16) entlang einer maximalen Bearbeitungslänge (C) zu bearbeiten, wobei sich Expansionskörper (44, 46) zumindest mit einer Länge (C₁) entlang der Längsachse (L₁) des Aufnahmebereichs (18) erstreckt, die insbesondere mehr als ein Viertel der maximalen Bearbeitungslänge (C) beträgt und vorzugsweise mehr als die Hälfte oder mehr als drei Viertel der maximalen Bearbeitungslänge (C) beträgt.

3. Vorrichtung (10) nach Anspruch 1 oder 2,
**dadurch gekennzeichnet, dass** der Expansionskörper (44, 46) mit variablen Querschnittsabsmessungen ausgebildet ist und insbesondere, wobei der Expansionskörper (44, 46) dazu ausgebildet ist, quer zu der Längsachse (L₁) des Aufnahmebereichs (18) zu expandieren.

4. Vorrichtung (10) nach einem der vorangehenden Ansprüche,
**dadurch gekennzeichnet, dass** der Expansionskörper (44, 46) dazu ausgebildet ist, durch Beaufschlagen mit einem Druckmedium zu expandieren.

5. Vorrichtung (10) nach einem der vorangehenden Ansprüche,
**dadurch gekennzeichnet, dass** der Expansionskörper (44, 46) schlauchförmig ausgebildet ist, und insbesondere wobei der Expansionskörper (44, 46) zumindest abschnittsweise ein flexibel deformierbares Material umfasst.

6. Vorrichtung (10) nach einem der vorangehenden Ansprüche,
**dadurch gekennzeichnet, dass** der Expansionskörper (44, 46) dazu ausgebildet ist, das Werkstück (16) gegen einen Klemmanschlag (50) zu klemmen, insbesondere wobei der Klemmanschlag (50) auf einer dem Expansionskörper (44, 46) gegenüberliegende Seite der Längsachse (L₁) des Aufnahmebereichs (18) angeordnet ist.

7. Vorrichtung (10) nach einem der vorangehenden Ansprüche,
**dadurch gekennzeichnet, dass** der Expansionskörper (44, 46) dazu ausgebildet ist, eine Expansionskraft zumindest teilweise auf ein Klemmelement (30) zu übertragen, das zum Erzielen einer Klemmkraft (K) in Anlage mit dem Werkstück bringbar ist.

8. Vorrichtung (10) nach Anspruch 7,
**dadurch gekennzeichnet, dass** der Expansionskörper (44, 46) dazu ausgebildet ist, das Klemmelement (30) bei einer Expansion in Richtung des Werkstücks (16) zu verlagern.

9. Vorrichtung (10) nach Anspruch 8,
**dadurch gekennzeichnet, dass** das Klemmelement (30) entlang einer Expansionskörperlängsachse betrachtet segmentartig ausgebildet ist und, wobei die Segmente (31) jeweils um unterschiedliche Maße in Richtung des Werkstücks (16) verlagerbar sind und/oder wobei einzelne Segmente (31) entfernbar sind.

10. Vorrichtung (10) nach einem der vorangehenden Ansprüche,
**dadurch gekennzeichnet, dass** der Expansionskörper (44, 46) dazu ausgebildet ist, sich während einer Expansion an einem Expansionsanschlag (28) abstützen, wobei der Expansionskörper (44, 46) zwischen dem Expansionsanschlag (28) und dem Werkstück (16) angeordnet ist

11. Vorrichtung (10) nach einem der Ansprüche 7 bis 10,
**dadurch gekennzeichnet, dass** die Klemmvorrichtung (22) ferner eine Rückführvorrichtung (48) umfasst, die dazu ausgebildet ist, zumindest temporär eine Kraft (R) auf das Klemmelement auszuüben, die entgegen der Klemmkraft (K) wirkt, und insbesondere, wobei die Rückführvorrichtung (48) dazu ausgebildet ist, dass Klemmelement (30) in eine entgegengesetzte Richtung zu verlagern, wie der erste Expansionskörper (44).

12. Vorrichtung (10) nach Anspruch 11,
**dadurch gekennzeichnet, dass** die Rückführvorrichtung (48) ein Federelement umfasst, insbesondere eine Druckfeder.

13. Vorrichtung (10) nach Anspruch 11 oder 12,
**dadurch gekennzeichnet, dass** die Rückführvorrichtung (48) einen zweiten Expansionskörper (46) umfasst.

14. Vorrichtung (10) nach Anspruch 13,
**dadurch gekennzeichnet, dass** der zweite Expansionskörper (46) dazu ausgebildet ist, eine Expansionskraft in einen Flächenabschnitt des Klemmelements einzuleiten, der einer als Anlagefläche zum Werkstück dienenden Fläche (35) des Klemmelements (30) gegenüberliegt, und insbesondere, dass das Klemmelement (30) den ersten und zweiten Expansionskörper (44, 46) zumindest abschnittsweise überspannt.

15. Vorrichtung (10) nach Anspruch 11 oder 14,
**dadurch gekennzeichnet, dass** der erste und zweite Expansionskörper (44, 46) beidseitig des Expansionsanschlags (28) angeordnet sind, und insbesondere, wobei das Klemmelement (30) den ersten und zweiten Expansionskörper (44, 46) und den Expansionsanschlag (28) zumindest abschnittsweise überspannt.
